# EUROPEAN PATENT APPLICATION

(11) **EP 4 317 922 A1**
(43) Date of publication of application: **07.02.2024**
(21) Application number: 22780376.4
(22) Date of filing: 23.03.2022
(51) Int. Cl.: G01F 1/66

(54) **ULTRASONIC FLOWMETER**

(30) Priority: 01.04.2021 JP 2021062521
(71) Applicant: Panasonic Intellectual Property Management Co., Ltd., Osaka 571-0057 (JP)
(72) Inventor: GYOUTOKU Taiti, Osaka 571-0057 (JP); SUEYOSHI Shingo, Osaka 571-0057 (JP)
(74) Representative: SSM Sandmair
(86) International application number: PCT/JP2022/013495
(87) International publication number: WO 2022/210161

(57) **Abstract**

An ultrasonic flowmeter includes a measurement flow channel, a pair of ultrasonic transceivers, an amplifier, a propagation time period measuring part, a storage, a flow rate calculator, and a water entry determiner. The amplifier is configured to amplify am ultrasonic wave signal received by one of the pair of ultrasonic transceivers. The propagation time period measuring part is configured to measure a propagation time period between the pair of ultrasonic transceivers by sensing an output signal of the amplifier. The storage is configured to store an amplification degree set by the amplifier and the propagation time period measured by the propagation time period measuring part in each predetermined time period. The flow rate calculator is configured to calculate, based on the propagation time period measured by the propagation time period measuring part, a flow rate of the fluid to be measured. The water entry determiner is configured to determine, based on the amplification degree set by the amplifier and the propagation time period measured by the propagation time period measuring part, whether or not water enters the measurement flow channel. The water entry determiner is configured to determine a water entry when a currently set amplification degree is greater than the amplification degree stored in the storage by a predetermined value and a ratio of a currently measured propagation time period to the propagation time period stored in the storage is less than or equal to a predetermined ratio.

## Description

### Technical Field

The present disclosure relates to ultrasonic flowmeters configured to measure a flow rate of a gas by using an ultrasonic wave and specifically relates to an ultrasonic flowmeter having a function of sensing an entry of water into a measurement flow channel.

### Background Art

Patent Literature 1 discloses an ultrasonic flowmeter including a water entry determiner configured to determine that water is present in a measurement flow channel. The ultrasonic flowmeter includes: a flow rate operation means configured to calculate a gas flow rate from a propagation time period measured by a propagation time period measuring part; and a component configured to determine that water is present in the measurement flow channel when a change in an amplification degree adjusted by an amplifier is greater than or equal to a predetermined value and the propagation time period measured by the propagation time period measuring part is within a predetermined range.

### Citation List

### Patent Literature

Patent Literature 1: JP 2018-025409 A

### Summary of Invention

The present disclosure provides an ultrasonic flowmeter configured to reliably determine an entry of water by sensing a change in a propagation time period caused by the entry of the water and by taking a delay in the change into consideration.

An ultrasonic flowmeter of the present disclosure includes a measurement flow channel through which a fluid to be measured flows, a pair of ultrasonic transceivers, an amplifier, a propagation time period measuring part, a storage, a flow rate calculator, and a water entry determiner. The pair of ultrasonic transceivers are disposed upstream and downstream in the measurement flow channel. The amplifier is configured to amplify an ultrasonic wave signal received by one of the pair of ultrasonic transceivers to a predetermined amplitude. The propagation time period measuring part is configured to measure a propagation time period between the pair of ultrasonic transceivers by sensing an output signal of the amplifier. The storage is configured to store an amplification degree set by the amplifier and the propagation time period measured by the propagation time period measuring part in each predetermined time period. The flow rate calculator is configured to calculate, based on the propagation time period measured by the propagation time period measuring part, a flow rate of the fluid to be measured. The water entry determiner is configured to determine, based on the amplification degree set by the amplifier and the propagation time period measured by the propagation time period measuring part, whether or not water enters the measurement flow channel. The water entry determiner is configured to determine a water entry when a currently set amplification degree is greater than the amplification degree stored in the storage by a predetermined value or more and a ratio of a currently measured propagation time period to the propagation time period stored in the storage is less than or equal to a predetermined ratio. Thus, entry of water can be reliably determined.

An ultrasonic flowmeter of the present disclosure can reliably determine the entry of water by sensing a change in the propagation time period caused by the entry of water into the measurement flow channel.

### Brief Description of Drawings

FIG. 1 is a view of a configuration of an ultrasonic flowmeter of a first embodiment,
FIG. 2A is an illustrative view of an operation of an amplifier of the first embodiment;
FIG. 2B is an illustrative view of the operation of the amplifier of the first embodiment;
FIG. 2C is an illustrative view of the operation of the amplifier of the first embodiment;
FIG. 3 is a flowchart of a water entry determination operation of the first embodiment;
FIG. 4 is an illustrative view of a timing of a flow rate measurement and a timing of storing a propagation time period and an amplification degree in a storage of the first embodiment;
FIG. 5 is a view of a configuration of an ultrasonic flowmeter of a variation of the first embodiment;
FIG. 6 is a flowchart of an operation relating to execution of a water entry determination of a second embodiment;
FIG. 7 is a flowchart of a water entry determination operation of a third embodiment; and
FIG. 8 is an illustrative view of a timing of a flow rate measurement and a timing of storing a propagation time period in a storage of the third embodiment.

### Description of Embodiments

### (Expertise and the Like as a Basis for Present Disclosure)

In an ultrasonic flowmeter, an entry of water into a measurement flow channel inhibits measurement of an accurate propagation time period, or the entry of water into the measurement flow channel reduces a flow channel sectional area and no longer enables an accurate flow rate to be calculated. Therefore, the entry of water has to be sensed to give a user a warning or the like.

In a so-called V-path arrangement, a pair of ultrasonic transceivers are disposed on one surface of a flow channel so that an ultrasonic wave is reflected off a surface corresponding to the one surface to measure a propagation time period of the ultrasonic wave. In this arrangement, a method is suggested in which the reflection surface is disposed downward with respect to gravity, and when water enters, the water at first resides on the reflection surface, and thereby, a change in a measurement condition due to residence of the water is detected.

Specifically, when the water resides on the reflection surface, the ultrasonic wave is diffused, and the ultrasonic wave to be reflected in a regular direction is attenuated, and therefore, attention is focused on that an amplification degree has to be increased at the time of reception, and based on an increase in the amplification degree, an entry of the water is determined. Moreover, when the determination is made based on only the increase in the amplification degree, a water entry is determined even in the case of the amplification degree being changed due to, for example, a change in the type of a gas. Therefore, as disclosed in Patent Literature 1, measures to be taken not to determine the water entry when the propagation time period determined based on the type of the gas is within a predetermined range are suggested.

The propagation time period, however, changes depending on the amount of water which has entered, and therefore, the inventors found problems that the propagation time period may deviate from the predetermined range and that the measured value of the propagation time period is temporarily unstable due to an adjustment of the amplification degree, and to solve these problems, the inventors acquired the basic idea of the subject matter of the present disclosure.

Embodiments will be described below in detail with reference to the drawings. Note that description which is detailed more than necessary may be omitted. For example, detailed description of already well known matters or redundant description of substantially the same components may be omitted.

It should be noted that the enclosed drawings and subsequent description are provided in order for a skilled person to sufficiently understand the present disclosure and are not intended to limit the subject matter recited in the claims.

### (First Embodiment)

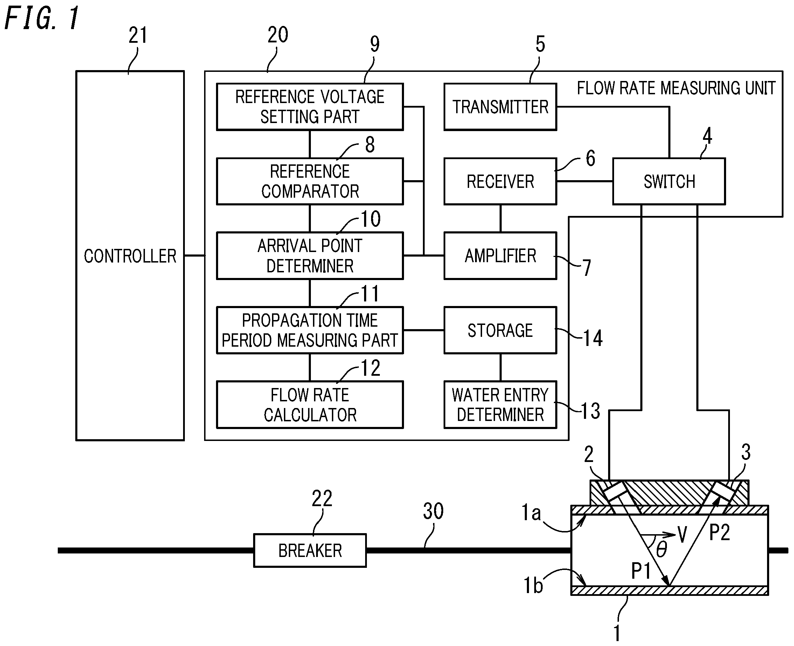

With reference to FIGS. 1 to 5, a first embodiment will be described below.

### [Configuration]

First of all, a typical configuration of an ultrasonic flowmeter according to the first embodiment will be specifically described with reference to FIG. 1.

As shown in FIG. 1, the ultrasonic flowmeter according to the first embodiment includes a pair of ultrasonic transceivers 2 and 3 disposed in a measurement flow channel 1, a flow rate measuring unit 20, a controller 21, and a breaker 22. The flow rate measuring unit 20 includes a switch 4, a transmitter 5, a receiver 6, an amplifier 7, a reference comparator 8, a reference voltage setting part 9, an arrival point determiner 10, a propagation time period measuring part 11, a flow rate calculator 12, a water entry determiner 13, and a storage 14. Note that specific configurations of the measurement flow channel 1, the ultrasonic transceivers 2 and 3, the flow rate measuring unit 20, the controller 21, and the breaker 22 are not particularly limited and may accordingly employ publicly known configurations.

The measurement flow channel 1 is part of a gas pipe 30, is a tubular flow channel having a rectangular cross section, and includes an installation surface 1a which is a top surface (upper surface) and a facing surface 1b which is a bottom surface (lower surface) facing the installation surface 1a. The ultrasonic transceivers 2 and 3 are disposed on the installation surface 1a which is an identical side surface of the measurement flow channel 1, wherein a first ultrasonic transceiver 2 is located upstream and a second ultrasonic transceiver 3 is located downstream. Thus, in the present embodiment, the ultrasonic transceivers 2 and 3 are disposed in a V-path arrangement.

As shown in FIG. 1, an ultrasonic wave is transmitted from the installation surface 1a on an upper side toward the facing surface 1b on a lower side and is reflected off the facing surface 1b toward the installation surface 1a. Therefore, the installation surface 1a is a transmission surface or a reception surface (transmission/reception surface) of the ultrasonic wave, and the facing surface 1b is a reflection surface of the ultrasonic wave. Note that in a transmission and reception example of the ultrasonic wave shown in FIG. 1, the ultrasonic transceiver 2 is a transmission side and the ultrasonic transceiver 3 is a reception side, but transmission and reception are switchable by the switch 4 as explained later.

In FIG. 1, an arrow P1 represents a propagation pathway of an ultrasonic wave (transmission wave) transmitted from the ultrasonic transceiver 2, which is the transmission side, and reaching the facing surface 1b, and an arrow P2 represents a propagation pathway of the ultrasonic wave reflected off the facing surface 1b and reaching, as a reflected wave, the ultrasonic transceiver 3, which is the reception side. The transmission wave forms an angle θ with respect to a gas flow direction V

The switch 4 switches one of the ultrasonic transceivers 2 and 3 to the transmission side and the other of the ultrasonic transceivers 2 and 3 to the reception side. The transmitter 5 causes the ultrasonic transceiver 2,3, which has been switched to the transmission side by the switch 4, to transmit an ultrasonic wave. The receiver 6 causes the ultrasonic transceiver 3,2, which has been switched to the reception side by the switch 4, to receive a reflection wave of the ultrasonic wave. The amplifier 7 adjusts and amplifies an amplification degree (gain) of a signal (reception signal) of the ultrasonic wave received by the ultrasonic transceiver 2,3, which is the reception side so that the amplitude of the reception signal falls within a predetermined range.

The reference comparator 8 compares the reception signal amplified by the amplifier 7 with a reference voltage set in advance. The reference voltage setting part 9 outputs a reference voltage based on an output of the amplifier 7 to the reference comparator 8. The arrival point determiner 10 determines an arrival point of the ultrasonic wave from an output of the reference comparator 8 and the reception signal amplified by the amplifier 7. The propagation time period measuring part 11 measures the propagation time period of the ultrasonic wave from an output of the arrival point determiner 10. That is, the propagation time period measuring part 11 measures the propagation time period between the pair of ultrasonic transceivers 2 and 3 by sensing an output signal of the amplifier 7. The flow rate calculator 12 calculates a gas flow rate from the propagation time period measured by the propagation time period measuring part 11. That is, the flow rate calculator 12 calculates, based on the propagation time period measured by the propagation time period measuring part 11, the flow rate of a gas which is a fluid to be measured.

In this configuration, the propagation time period measuring part 11 measures the propagation time period in each predetermined cycle (e.g., every 2 seconds), and the amplifier 7 constantly adjusts the amplification degree along with the measurement of the propagation time period.

The storage 14 stores the amplification degree set by the amplifier 7 and the propagation time period measured by the propagation time period measuring part 11 in each predetermined time period (e.g., every 60 seconds).

The water entry determiner 13 determines, based on the amplification degree stored in the storage 14 and the propagation time period measured by the propagation time period measuring part 11, whether or not water enters the measurement flow channel 1. That is, the water entry determiner 13 determines that water is present in the measurement flow channel 1 (makes the water entry determination) when the amplification degree set by the amplifier 7 increases by a predetermined value or more, and the ratio of the propagation time period measured by the propagation time period measuring part 11 decreases to less than or equal to a predetermined ratio. Note that saying that the amplification degree increases by the predetermined value or more means that a currently set amplification degree by the amplifier 7 is greater than the amplification degree stored in the storage 14 by the predetermined value or more, that is, the amplification degree set more than or equal to the predetermined time period before. Moreover, saying that the ratio of the propagation time period decreases to less than or equal to the predetermined ratio means that the ratio of a currently measured propagation time period by the propagation time period measuring part 11 to the propagation time period stored in the storage 14, that is, the propagation time period measured more than or equal to the predetermined time period before is less than or equal to the predetermined ratio. Details of the water entry determination will be described later.

The controller 21 controls a flow rate measurement operation and a water entry determination operation by the flow rate measuring unit 20 having the configuration described above. Moreover, the controller 21 controls a blocking operation of the gas pipe 30 by the breaker 22. The breaker 22 is controlled by the controller 21 to block gas supply in the gas pipe 30.

In the ultrasonic flowmeter having the configuration described above, a flow rate measurement by the flow rate measuring unit 20 controlled by the controller 21 will be described. The controller 21 causes the transmitter 5 to operate in response to a start of the flow rate measurement and causes one of the ultrasonic transceivers 2 and 3, for example, the first ultrasonic transceiver 2 to transmit an ultrasonic wave. Then, the controller 21 causes the propagation time period measuring part 11 to operate to start timing. The transmission wave (arrow P1) from the first ultrasonic transceiver 2 propagates in the gas in the measurement flow channel 1, is reflected off the facing surface 1b to become a reflection wave (arrow P2), which is received by the second ultrasonic transceiver 3.

A signal (reception signal) of the ultrasonic wave thus received is output via the receiver 6 to the amplifier 7. The amplifier 7 is controlled by the controller 21 to adjust and amplify the amplification degree of the reception signal so that the waveform of the reception signal has a constant amplitude. Note that an adjustment method of the amplification degree will be described later.

The reception signal amplified by the amplifier 7 is output to the reference comparator 8, the reference voltage setting part 9, and the arrival point determiner 10. The reference voltage setting part 9 generates a reference voltage at a predetermined ratio with respect to a peak voltage of the output of the amplifier 7 and outputs the reference voltage to the reference comparator 8. The reference comparator 8 compares the output (amplified reception signal) of the amplifier 7 with the output (reference voltage) from the reference voltage setting part 9, and the reference comparator 8 outputs a comparison result to the arrival point determiner 10. The arrival point determiner 10 determines that a zero crossing point described later is the arrival point of the ultrasonic wave, and outputs the arrival point to the propagation time period measuring part 11. The propagation time period measuring part 11 measures, as the propagation time period, a time period from a start of the timing to the arrival point.

The controller 21 causes the switch 4 to switch transmission and reception of the ultrasonic transceivers 2 and 3, and in a similar manner to the description above, the controller 21 causes the second ultrasonic transceiver 3 to transmit an ultrasonic wave and causes the first ultrasonic transceiver 2 to receive the ultrasonic wave. Then, the controller 21 causes the propagation time period measuring part 11 to measure the propagation time period. Then, a series of ultrasonic wave transmission and reception operations described above is repeated a preset number of times. The propagation time period thus measured is output to the flow rate calculator 12, and a flow rate value is calculated. Note that a calculation method of the flow rate value can appropriately employ any publicly known method, and therefore, the detailed description thereof will be omitted.

### [Adjustment of Amplification Degree]

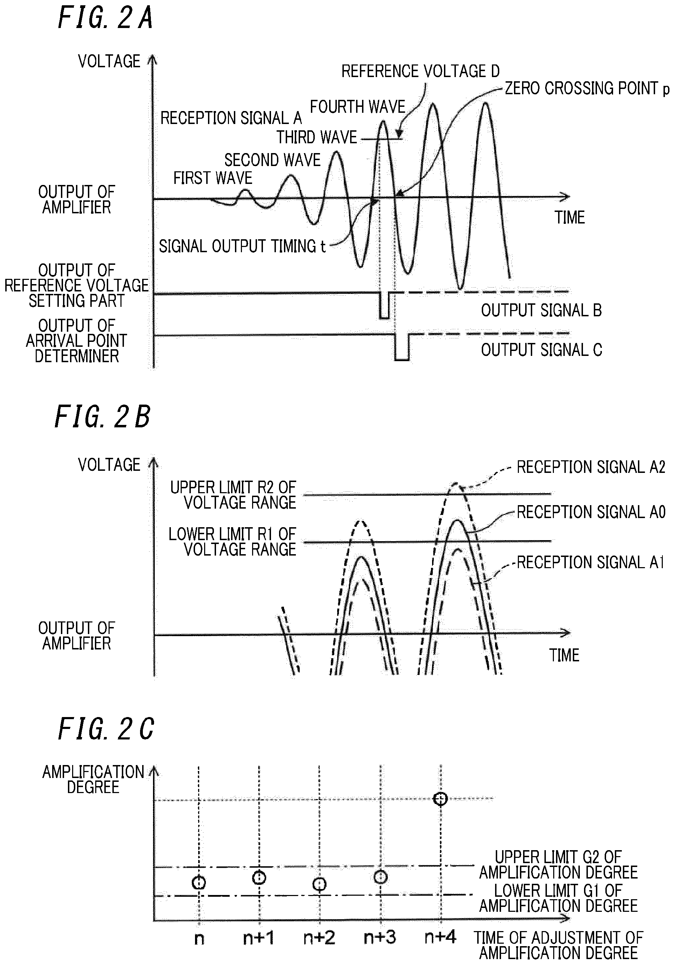

Next, a typical example of the adjustment method of the amplification degree by the amplifier 7 and the water entry determination with reference to the amplification degree will be specifically described together with an arrival point determination method by the arrival point determiner 10 with reference to FIGS. 2A, 2B and 2C.

As shown in FIG. 2A, the waveform of a reception signal A (an output of an amplification signal) has a plurality of peaks, but the arrival point determiner 10 usually identifies a wave of an arbitrary number counted from the reception and determines a "first negative zero crossing point p" at which the sign of the reception signal A changes from positive to negative in the wave to be the arrival point. In the present embodiment, the zero crossing point p of a fourth wave is determined.

In order to determine the zero crossing point p of the fourth wave, the reference voltage setting part 9 sets, as a reference voltage D, a voltage value at a midpoint between the peak voltage value of a third wave and the peak voltage value of the fourth wave of the reception signal A. The reference comparator 8 compares the reception signal A and the reference voltage D with each other, and as shown at a signal output timing t of FIG. 2A, the reference comparator 8 outputs, at a time point at which the magnitude relationship between the reception signal A and the reference voltage D is reversed, an output signal B to the arrival point determiner 10. The arrival point determiner 10 determines a first negative zero crossing point p shown in FIG. 2A to be the arrival point of the ultrasonic wave and outputs an output signal C to the propagation time period measuring part 11.

Here, the reception signal A is a signal amplified by the amplifier 7 to have a constant amplitude. For example, as shown in FIG. 2B, the amplifier 7 adjusts the amplification degree (gain value, amplification degree) such that a maximum voltage value (peak value) of the fourth wave of the reception signal A falls within a predetermined voltage range (from a lower limit R1 to an upper limit R2 of a voltage range).

In FIG. 2B, a reception signal A0 represented by a solid line falls within the predetermined voltage range, but a reception signal A1 represented by a long dashed line has a maximum voltage value smaller than the lower limit R1 of the voltage range, and a reception signal A2 represented by a short dashed line has a maximum voltage value exceeding the upper limit R2 of the voltage range. In such a case, the amplifier 7 is controlled by the controller 21 such that the amplifier 7 adjusts the amplification degree so that the maximum voltage value falls within the predetermined voltage range. In the case of the reception signal A1, the amplification degree is increased, whereas in the case of the reception signal A2, the amplification degree is reduced. Such an adjustment operation of the amplification degree is performed for each flow rate measurement.

FIG. 2C schematically shows magnitudes of the amplification degree with respect to times of adjustment of the amplification degree performed for respective flow rate measurement. In FIG. 2C, in the case of a normal state, as in nth to (n+3)th adjustments of the amplification degree, the value of the amplification degree falls within the predetermined range (from a lower limit G1 to an upper limit G2 of the amplification degree). However, for example, when water externally enters the measurement flow channel 1 and the water is present in the measurement flow channel 1, the amplification degree exceeds the upper limit G2 and significantly increases as in the case of an (n+4)th adjustment.

In contrast, it is known that when water enters the measurement flow channel 1, the propagation time period measured by the propagation time period measuring part 11 decreases depending on the amount of the water which resides, and therefore, in order to reliably determine the water entry, a change in the propagation time period, together with a change in the amplification degree, is considered to be checked.

As a result of an experiment conducted based on this expertise, the inventors found that in the course of an entry of water into the measurement flow channel, a disturbance occurs in the change in the amplification degree and the change in the propagation time period, and therefore, there may be a case where the propagation time period cannot be reliably measured.

The inventors thus found that when the propagation time period measured by the propagation time period measuring part 11 and the amplification degree set by the amplifier 7 are both determined to be stable, a comparison regarding the propagation time period measured by the propagation time period measuring part 11 and a comparison regarding the amplification degree set by the amplifier 7 are made, and thereby, the water entry determination can be reliably made. The inventors found, as a method of making the comparison regarding the propagation time period and the comparison regarding the amplification degree except for the propagation time period and the amplification degree in an unstable time period during which the propagation time period and the amplification degree are unstable, a method of storing the propagation time period and the amplification degree in each predetermined time period and comparing a currently measured propagation time period and a currently measured amplification degree respectively with values of the propagation time period and the amplification degree thus stored, and the inventors thus acquired the basic idea of the present application.

### [Water Entry Determination]

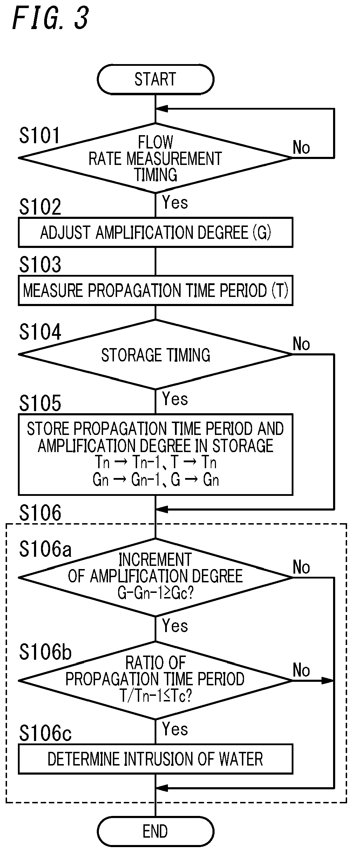

Next, a typical example of the water entry determination by the water entry determiner 13 will be specifically explained with reference to the flowchart of FIG. 3.

First of all, the controller 21 determines whether or not it is a timing of the flow rate measurement of a predetermined cycle (e.g., 2 seconds) (step S101). If it is the timing of the flow rate measurement (step S101: Yes), then, as a next process, the amplifier 7 adjusts an amplification degree G by the method described above (step S102), and the propagation time period measuring part 11 measures a propagation time period T (step S103). Note that if it is not the timing of the flow rate measurement (step S101: No), whether or not it is the timing of the flow rate measurement is determined again.

Then, whether or not it is a timing of storing the propagation time period T and the amplification degree G is determined (step S104). If it is the timing of the storing (step S104: Yes), a previously stored propagation time period Tn is stored in the storage 14 as a propagation time period Tn-1 (hereinafter referred to as a previously stored propagation time period) of one time before the previously stored propagation time period Tn, and a currently measured propagation time period T is stored in the storage 14 as a propagation time period Tn (hereinafter referred to as a currently stored propagation time period). In a similar manner, a previously stored amplification degree G is stored in the storage 14 as an amplification degree Gn-1 (hereinafter referred to as a previously stored amplification degree) stored one time before the previously stored amplification degree G, and a currently measured amplification degree G is stored in the storage 14 as an amplification degree Gn (hereinafter referred to as a currently stored amplification degree) (step S105). Thus, the stored propagation time period and the stored amplification degree are updated, and subsequently, in step S106, the water entry determination is made.

If it is determined in the step S104 that it is not a timing of storing (step S104: No), the step S105 is not executed, the process proceeds to step S106, and the water entry determination is made.

In the step S106, first of all, whether or not an increment (G-Gn-1) of the currently set amplification degree G with respect to the previously stored amplification degree Gn-1 is greater than or equal to a predetermined value Gc (step S106a). If the increment (G-Gn-1) is greater than or equal to the predetermined value Gc (step S106a: Yes), then, a ratio (T/Tn-1) of the currently measured propagation time period T to the previously stored propagation time period Tn-1 is subsequently determined (step S106b). If the ratio (T/Tn-1) is less than or equal to a predetermined ratio Tc (step S106b: Yes), the water entry determiner 13 determines the water entry (step S106c).

Note that the determination of the increment of the amplification degree G (step S106a) may be made after the determination of the ratio of the propagation time period T (step S106b).

Moreover, if the increment (G-Gn-1) of the currently set amplification degree G with respect to the previously stored amplification degree Gn-1 is less than the predetermined value Gc (step S106a: No), or if the ratio of the currently measured propagation time period T to the previously stored propagation time period Tn-1 is greater than the predetermined ratio Tc (step S106b: No), an entry of no water is determined, and the process leaves the step S106.

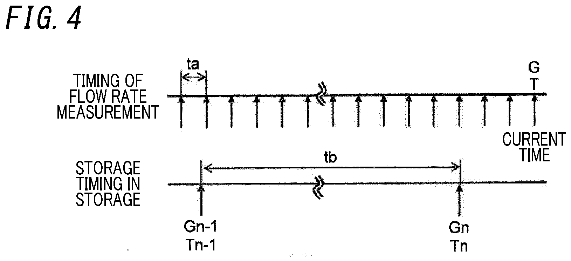

FIG. 4 shows, in time series, the timing of the flow rate measurement by the flow rate measuring unit 20 and the timing of storing the propagation time period and the amplification degree in the storage 14. The flow rate measurement is executed in each predetermined cycle ta (e.g., every 2 seconds), and at this timing, the amplification degree is adjusted, and the propagation time period is measured. In contrast, the propagation time period and the amplification degree are stored in the storage 14 in each predetermined time period tb (e.g., every 60 seconds).

The determination as to the water entry by the water entry determiner 13 is made for each flow rate measurement. As can be seen from FIG. 4, the currently measured propagation time period T, the currently set amplification degree G, the previously stored amplification degree Gn-1, and the previously stored propagation time period Tn-1 in the storage 14 are used as propagation time periods and amplification degrees for the water entry determination, thereby performing a comparison with values stored at least more than or equal to the predetermined time period tb before.

### [Effects, etc.]

As described above, the ultrasonic flowmeter of the present embodiment includes the measurement flow channel 1 through which a fluid to be measured flows, the pair of ultrasonic transceivers 2 and 3, the amplifier 7, the propagation time period measuring part 11, the storage 14, the flow rate calculator 12, and the water entry determiner 13. The pair of ultrasonic transceivers 2 and 3 are disposed upstream and downstream in the measurement flow channel 1. The amplifier 7 amplifies an ultrasonic wave signal received by the ultrasonic transceiver 2, 3 to a predetermined amplitude. The propagation time period measuring part 11 measures a propagation time period between the ultrasonic transceivers 2 and 3 by sensing an output signal of the amplifier 7. The storage 14 stores an amplification degree set by the amplifier 7 and the propagation time period measured by the propagation time period measuring part 11 in each predetermined time period. The flow rate calculator 12 calculates, based on the propagation time period measured by the propagation time period measuring part 11, the flow rate of the fluid to be measured. The water entry determiner 13 determines, based on the amplification degree set by the amplifier 7 and the propagation time period measured by the propagation time period measuring part 11, whether or not water enters the measurement flow channel 1. The water entry determiner 13 determines that the water is present in the measurement flow channel 1 when the amplification degree set at the time of a current flow rate measurement is greater than the stored amplification degree stored in the storage 14 by the predetermined value Gc or more and the ratio of the propagation time period measured at the time of the current flow rate measurement to the stored propagation time period stored in the storage 14 is less than or equal to the predetermined ratio Tc.

Thus, when water enters the measurement flow channel, the amplification degree and the propagation time period of more than or equal to the predetermined time period before are compared with the current amplification degree and the current propagation time period, thereby eliminating a time period during which a measurement is unstable. Thus, the determination of the water entry can be reliably made.

Note that in the present embodiment, the pair of ultrasonic transceivers 2 and 3 are disposed in the V-path arrangement in the measurement flow channel 1. Here, if water is present in the measurement flow channel 1, the ultrasonic wave (transmission wave) transmitted from the ultrasonic transceiver 2,3 which is the transmission side is reflected off not only the facing surface 1b but also a water surface, and therefore, the flow rate of the fluid to be measured can no longer be accurately measured. In a gas meter as an example of the ultrasonic flowmeter, when the flow rate of a gas which is the fluid to be measured cannot accurately measure, a gas supply has to be interrupted. Therefore, if the water entry determiner 13 determines the water entry, the controller 21 can also cause the breaker 22 to operate so that the gas supply is interrupted.

Note that a description that timings at which the propagation time period T and the amplification degree G are stored in the storage 14 are in the same cycle has been given, but the propagation time period T and the amplification degree G may be stored in different cycles.

Moreover, as the stored propagation time period to be compared, a stored propagation time period of one time before, that is, the previously stored propagation time period Tn-1 is used, but propagation time periods before the previously stored propagation time period Tn-1 may be stored as a stored propagation time period Tn-2 of two times before and a stored propagation time period Tn-3 of three times before, and the stored propagation time periods before the previously stored propagation time period Tn-1 may be used. Similarly, as the stored amplification degree to be compared, a stored amplification degree of one time before, that is, the previously stored amplification degree Gn-1 is used, but amplification degrees before the previously stored amplification degree Gn-1 may be stored as a stored amplification degree Gn-2 of two times before and stored amplification degree Gn-3 of three times before, and the stored amplification degrees before the previously stored amplification degree Gn-1 may be used.

### [Variation]

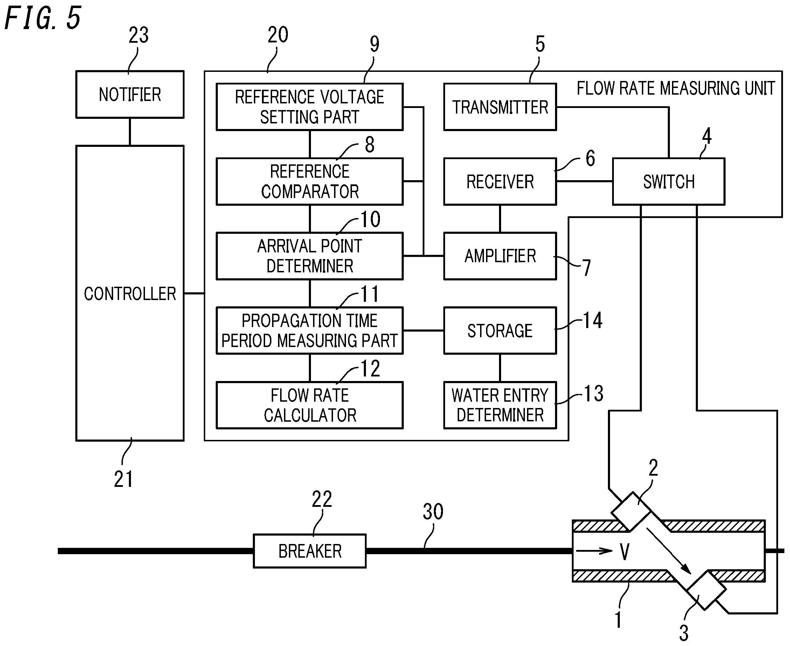

Note that the water entry determination by the water entry determiner 13 is not only applicable to the arrangement of the ultrasonic transceivers 2 and 3 in the V-path arrangement shown as an example in FIG. 1 but also applicable to, for example, a Z-path arrangement as shown in a variation in FIG. 5.

For example, in the V-path arrangement as explained above, the pair of ultrasonic transceivers 2 and 3 are disposed on a top surface (installation surface 1a) side of the measurement flow channel 1. Therefore, when water is present on a bottom surface (facing surface 1b) serving as the reflection surface of the ultrasonic wave, the ultrasonic wave is reflected off not only the bottom surface but also the water surface. Thus, as described above, after it is confirmed that both the amplification degree and the propagation time period satisfy a predetermined condition, the water entry determination is made.

In contrast, in the Z-path arrangement, as shown in FIG. 5, when one (in FIG. 4, the ultrasonic transceiver 2) of the pair of ultrasonic transceivers 2 and 3 is disposed at the top surface, water may reside on the other (in FIG. 4, the ultrasonic transceiver 3) of the pair of ultrasonic transceivers 2 and 3. That is, when the one ultrasonic transceiver 2,3 is located upward in the gravity direction and the other ultrasonic transceiver 3,2 is located downward in the gravity direction, water may reside on the other ultrasonic transceiver 3,2.

In this case, the ultrasonic wave transmitted from the one ultrasonic transceiver 2,3 may be reflected off the water surface, and therefore, in a similar manner to the V-path, the water entry determiner 13 confirms that both the amplification degree and the propagation time period satisfy the predetermined condition. Therefore, also when one of the pair of ultrasonic transceivers 2 and 3 is disposed at the top surface, a satisfactory water entry determination can be made.

Moreover, as shown in FIG. 5, the ultrasonic flowmeter according to the present embodiment may include a notifier 23 configured to notify a user of the occurrence of the water entry by control by the controller 21. The notifier 23 may be configured to notify of not only the occurrence of the water entry but also interruption of the gas supply as a result of the occurrence of the water entry, or may be configured to notify of other abnormalities in addition to the occurrence of the water entry and the interruption of the gas supply.

The notifier 23 may be a display apparatus, a light-emitting element, a voice alarm, or the like which is disposed on the ultrasonic flowmeter and which is configured to notify of an abnormality. Moreover, the notifier 23 may be configured to notify a gas user or a gas supplier by using a public or dedicated communication means or by using the Internet. Note that as shown in FIG. 1, the ultrasonic flowmeter does not necessarily include the notifier 23. Therefore, for example, a publicly known display device, a light emitting device, or a notice warning device may be additionally disposed as the notifier 23.

### (Second Embodiment)

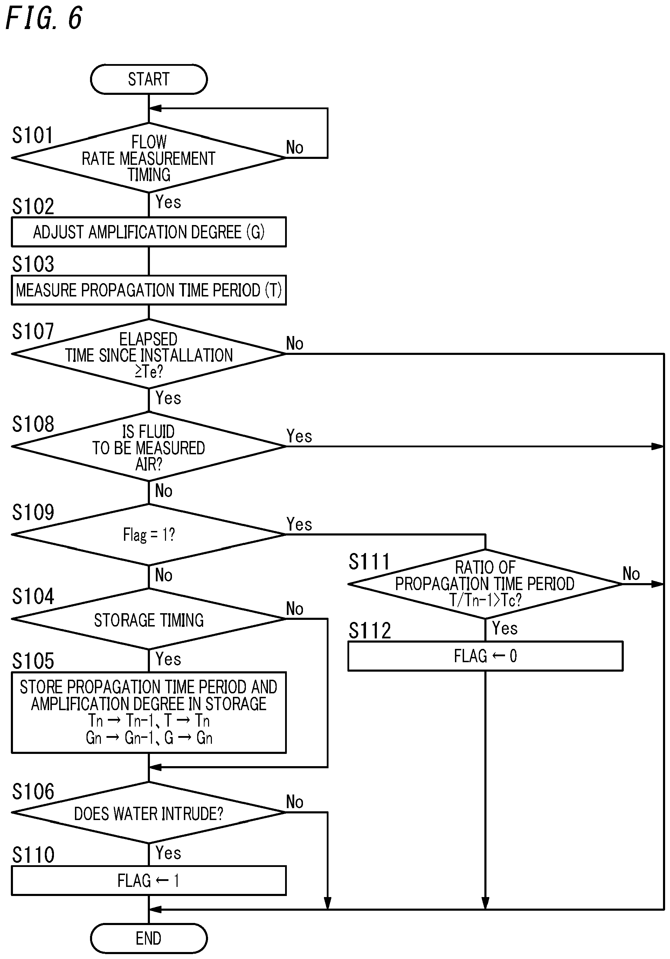

Next, as a second embodiment, an operation relating to execution of the water entry determination will be described with reference to the flowchart of FIG. 6.

In FIG. 6, processes similar to those in the flowchart shown in FIG. 3 are denoted by the same reference signs as those in FIG. 3, and the description thereof will be omitted. Moreover, a water entry determination process (step S106) is shown in a simplified manner.

First of all, two conditions are set as to whether or not the water entry determination process is to be performed.

A first condition is that a controller 21 times an elapsed time since the ultrasonic flowmeter was installed by being connected to a conduit or the like, and if a predetermined period Te has not elapsed since the installation (step S107: No), the process leaves the flow of the operation, thereby forgoing execution of the water entry determination. Note that it goes without saying that the elapsed time since the installation can be timed by giving, at the time of the installation, an operation to a switch or the like (not shown) to start timing.

A second condition is that when a fluid to be measured is determined to be air (step S108: Yes), the process leaves the flow of the operation, thereby forgoing execution of the water entry determination. Note that whether or not the fluid to be measured is air can be determined based on a propagation time period measured by a propagation time period measuring part 11.

Next, a process in the case where a water entry determiner 13 determines the water entry will be described.

First of all, if in the water entry determination process (step S106), the water entry is determined (step S106: Yes), a flag (FLAG) showing the water entry is set (1 is assigned)(step S110). Then, in step S109, whether or not the water entry is currently determined is determined. If the water entry is not currently determined (step S109: No), the process proceeds to processes of determining whether or not the propagation time period and the amplification degree are to be stored (step S104 and subsequent steps), and in accordance with conditions, the stored propagation time period and the stored amplification degree are updated.

If the water entry is currently determined (step S109: Yes), the process proceeds to step S111 of determining of no water entry but does not proceed to the process (step S109) of determining whether or not the propagation time period and the amplification degree are to be stored. Therefore, while the water entry is being determined, the stored propagation time period and the stored amplification degree stored in a storage 14 are not updated, and values at the time of the water entry determination remain stored.

In the step S111 for determining no water entry, the ratio (T/Tn-1) of the currently measured propagation time period T to the previously stored propagation time period Tn-1 is determined, and if the ratio (T/Tn-1) is greater than the predetermined ratio Tc (step S111: Yes), the flag (FLAG) representing that the water entry determination is being made is reset (0 is assigned), and the process leaves the flow of the operation.

Moreover, if the ratio (T/Tn-1) is less than or equal to a predetermined ratio Tc (step S 111: No), the process leaves the flow of the operation.

### [Effects, etc.]

As described above, in the present embodiment, after the water entry determiner 13 determines the water entry, the storage 14 does not store, that is, does not update, the amplification degree set by an amplifier 7 and the propagation time period measured by the propagation time period measuring part 11. Then, when the ratio of the currently measured propagation time period T to the stored propagation time period Tn-1 stored in the storage 14 at the time of the water entry determination exceeds the predetermined ratio, the determination of the water entry is released, that is, it is possible to determine no entry of water.

Moreover, in the present embodiment, the determination by the water entry determiner 13 is not made during a definite time period immediately after the installation, thereby preventing an erroneous determination of the water entry during the time period during which the component of the fluid to be measured is unstable.

Moreover, in the present embodiment, when the fluid to be measured is air, the determination by the water entry determiner 13 is not made, thereby preventing an erroneous determination when the air is switched to a gas (city gas, natural gas, or the like).

Note that the embodiment described above is to exemplify a technology in the present disclosure, and therefore, various changes, replacements, additions, omissions, etc. that fall within the scope of the claims or the range of equivalency of the claims may be made to embodiment described above.

### (Third Embodiment)

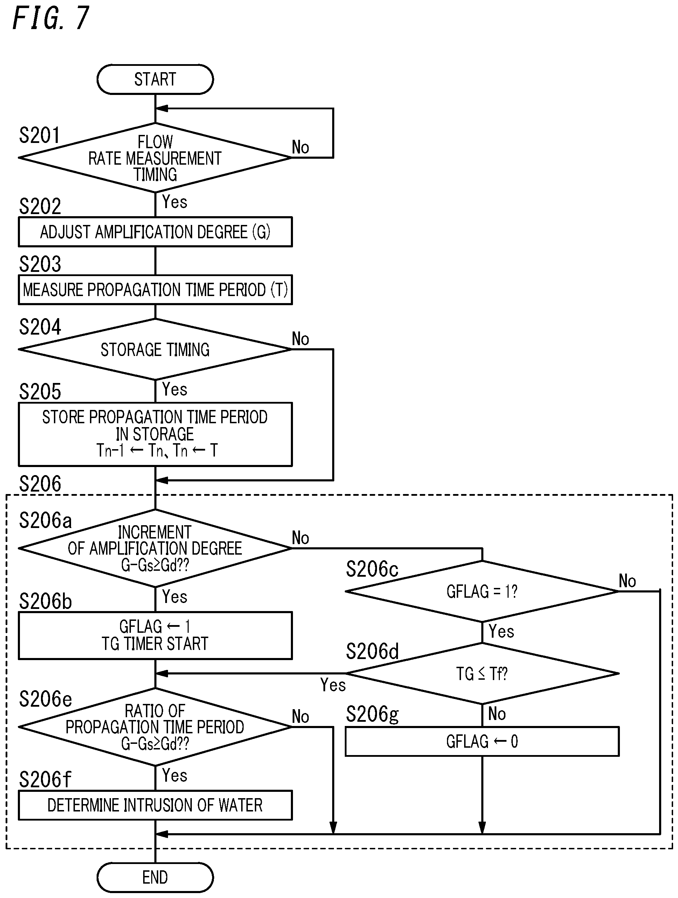

Next, as a third embodiment, another method of the water entry determination will be described with reference to the flowchart of FIG. 7. Note that a basic configuration is similar to FIG. 1 used in the first embodiment, and the third embodiment is different from the first embodiment in that a storage 14 stores only a propagation time period. Moreover, an adjustment of an amplification degree is the same as that in the first embodiment, and the description thereof will be omitted.

### [Water Entry Determination]

First of all, a controller 21 determines whether or not it is a timing of a flow rate measurement of a predetermined cycle (e.g., 2 seconds) (step S201). If it is the timing of the flow rate measurement (step S201: Yes), then, as a next process, an amplifier 7 adjusts an amplification degree G by the method described above (step S202), and a propagation time period measuring part 11 measures a propagation time period T (step S203). Note that if it is not the timing of the flow rate measurement (step 201: No), whether or not it is the timing of the flow rate measurement is determined again.

Then, whether or not it is a timing of storing the propagation time period T and the amplification degree G is determined (step S204). If it is the timing of the storing (step S204: Yes), a previously stored propagation time period Tn is stored in the storage 14 as a propagation time period Tn-1 (hereinafter referred to as a previously stored propagation time period) of one time before the previously stored propagation time period Tn, and a currently measured propagation time period T is stored in the storage 14 as a propagation time period Tn (hereinafter referred to as a currently stored propagation time period) (step S205). Thus, the stored propagation time periods are updated, and subsequently, in step S206, the water entry determination is made.

If it is determined in step S204 that it is not the timing of the storing (step S204: No), the step S205 is not executed, the process proceeds to step S206, and the water entry determination is made.

In the step S206, first of all, whether or not an increment (G-Gs) of a currently set amplification degree G with respect to an amplification degree Gs set at the time of a previous flow rate measurement (e.g., 2 seconds before) is greater than or equal to a predetermined value Gd (step S206a). If the increment (G-Gs) is greater than or equal to the predetermined value Gd (step S206a: Yes), GFLAG is set (1 is assigned) as a flag showing that the increment of the amplification degree is greater than or equal to the predetermined value, and a timer which counts a maintenance time period TG for maintaining the GFLAG is started (step 206b). Then, the process proceeds to step S206e.

If in the step S206a, the increment (G-Gs) of the currently set amplification degree G with respect to an amplification degree Gs set at the time of the previous flow rate measurement is less than the predetermined value Gd (step S206a: No), whether or not the GFLAG has been set is determined (step S206c). If the GFLAG has been set (step 206c: Yes), then, subsequently, whether or not the maintenance time period TG is shorter than or equal to a predetermined time period Tf (e.g., 120 seconds) (step S206d). If the maintenance time period TG is shorter than or equal to the predetermined time period Tf (step S206d: Yes), the process proceeds to step 206e. If the maintenance time period TG is greater than the predetermined time period Tf (step S206d: No), it is determined that the maintenance time period has elapsed, and the GFLAG is reset (0 is assigned) (step S206g), and the process leaves the flow of the operation.

Moreover, if in the step S206c, it is determined that the GFLAG has not been set (step 206c: No), the process leaves the flow of the operation.

In step 206e, the ratio of the currently measured propagation time period T to the previously stored propagation time period Tn-1 is determined, and if the ratio is less than or equal to the predetermined ratio Tc (step S206e: Yes), the water entry determiner 13 determines water entry (step S206f). Moreover, if the ratio of the currently measured propagation time period T to the previously stored propagation time period Tn-1 is greater than the predetermined ratio Tc (step S206e: No), an entry of no water is determined, and the process leaves the step S106.

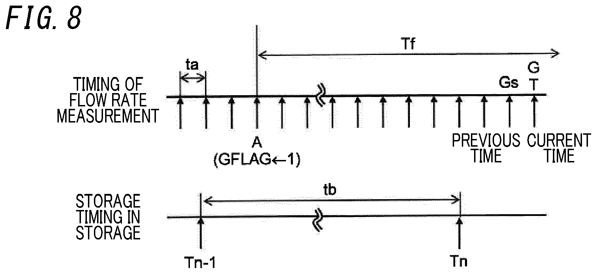

FIG. 8 shows, in time series, a relationship of the timing of the flow rate measurement by the flow rate measuring unit 20 to the timing of storing the propagation time period in the storage 14 and to the predetermined time period Tf which is the maintenance time period of the GFLAG. The flow rate measurement is executed in each predetermined cycle ta (e.g., every 2 seconds), and at this timing, the propagation time period is measured, and the amplification degree is adjusted. On the other hand, the propagation time period is stored in the storage 14 in each predetermined time period tb (e.g., every 60 seconds).

For example, when at a timing A, the process in the step S206b is executed, the process in the step S206e is always executed for the predetermined time period Tf (e.g., 120 seconds).

Therefore, in the predetermined time period Tf (the maintenance time period of the GFLAG) after the amplification degree is greater than the previous amplification degree by Gd or more, the determination in the step 206e is to be executed, and thereby, the ratio of the currently measured propagation time period T to the previously stored propagation time period Tn-1 is to be determined. Moreover, as in the first embodiment, as can be seen from FIG. 8, using the currently measured propagation time period T and the previously stored propagation time period Tn-1 stored in the storage 14 results in a comparison with values stored at least more than or equal to the predetermined time period tb before.

### [Effects, etc.]

As described above, the ultrasonic flowmeter of the present embodiment includes the measurement flow channel 1 through which a fluid to be measured flows, the pair of ultrasonic transceivers 2 and 3, the amplifier 7, the propagation time period measuring part 11, the storage 14, the flow rate calculator 12, and the water entry determiner 13. The pair of ultrasonic transceivers 2 and 3 are disposed upstream and downstream in the measurement flow channel 1. The amplifier 7 amplifies an ultrasonic wave signal received by the ultrasonic transceiver 2, 3 to a predetermined amplitude. The propagation time period measuring part 11 measures a propagation time period between the ultrasonic transceivers 2 and 3 by sensing an output signal of the amplifier 7. The storage 14 stores the propagation time period measured by the propagation time period measuring part 11 in each predetermined time period. The flow rate calculator 12 calculates, based on the propagation time period measured by the propagation time period measuring part 11, the flow rate of the fluid to be measured. The water entry determiner 13 determines, based on the amplification degree set by the amplifier 7 and the propagation time period measured by the propagation time period measuring part 11, whether or not water enters the measurement flow channel 1. The water entry determiner 13 determines that water is present in the measurement flow channel 1 when the ratio of the currently measured propagation time period T to the propagation time period Tn-1 stored in the storage is less than the predetermined ratio Tc within the predetermined time period Tf after the currently set amplification degree is greater than the previously set amplification degree by the predetermined value Gc or more.

Therefore, when water enters the measurement flow channel, in a predetermined time period after the amplification degree is greater than the previous amplification degree by Gd or more, the comparison regarding the propagation time period can be made by comparing a current propagation time period with a propagation time period of more than or equal to the predetermined time period before except for the propagation time period in a time period during which a measurement is unstable. Thus, the determination of the water entry can be reliably made.

Note that as the stored propagation time period to be compared, a stored propagation time period of one time before, that is, the previously stored propagation time period Tn-1 is used, but propagation time periods before the previously stored propagation time period Tn-1 may be stored as a stored propagation time period Tn-2 of two times before and a stored propagation time period Tn-3 of three times before, and the stored propagation time periods before the previously stored propagation time period Tn-1 may be used.

Moreover, as in the second embodiment, after the water entry determiner 13 determines the water entry, the storage 14 does not have to store, that is, does not have to update, the propagation time period measured by the propagation time period measuring part 11. Then, when the ratio of the currently measured propagation time period T to the stored propagation time period Tn-1 stored in the storage 14 at the time of the water entry determination exceeds the predetermined ratio, the determination of the water entry is released, that is, it is possible to determine no entry of water.

Moreover, as in the second embodiment, the water entry determination by the water entry determiner 13 is not made during a definite time period immediately after the installation, thereby preventing an erroneous determination of the water entry during the time period during which the component of the fluid to be measured is unstable.

Moreover, as in the second embodiment, when the fluid to be measured is air, the determination by the water entry determiner 13 is not made, thereby preventing an erroneous determination when the air is switched to a gas (city gas, natural gas, or the like).

Note that the embodiment described above is to exemplify a technology in the present disclosure, and therefore, various changes, replacements, additions, omissions, etc. that fall within the scope of the claims or the range of equivalency of the claims may be made to embodiment described above.

### Industrial Applicability

As described above, the ultrasonic flowmeter according to the present invention can be widely used in the field of a gas meter and the like requiring a water entry determination.

### Reference Signs List

- 1: Measurement Flow Channel
- 2, 3: Ultrasonic Transceiver
- 7: Amplifier
- 11: Propagation Time Period Measuring Part
- 12: Flow Rate Calculator
- 13: Water Entry Determiner
- 14: Storage

## Claims

1. An ultrasonic flowmeter comprising:
a measurement flow channel through which a fluid to be measured flows;
a pair of ultrasonic transceivers disposed upstream and downstream in the measurement flow channel;
an amplifier configured to amplify an ultrasonic wave signal received by one of the pair of ultrasonic transceivers to a predetermined amplitude;
a propagation time period measuring part configured to measure a propagation time period between the pair of ultrasonic transceivers by sensing an output signal of the amplifier;
a storage configured to store an amplification degree set by the amplifier and the propagation time period measured by the propagation time period measuring part in each predetermined time period;
a flow rate calculator configured to calculate, based on the propagation time period measured by the propagation time period measuring part, a flow rate of the fluid to be measured; and
a water entry determiner configured to determine, based on the amplification degree set by the amplifier and the propagation time period measured by the propagation time period measuring part, whether or not water enters the measurement flow channel,
the water entry determiner being configured to determine a water entry when a currently set amplification degree is greater than the amplification degree stored in the storage by a predetermined value or more and a ratio of a currently measured propagation time period to the propagation time period stored in the storage is less than or equal to a predetermined ratio.

2. The ultrasonic flowmeter comprising:
a measurement flow channel through which a fluid to be measured flows;
a pair of ultrasonic transceivers disposed upstream and downstream in the measurement flow channel;
an amplifier configured to amplify an ultrasonic wave signal received by one of the ultrasonic transceivers to a predetermined amplitude;
a propagation time period measuring part configured to measure a propagation time period between the pair of ultrasonic transceivers by sensing an output signal of the amplifier;
a storage configured to store the propagation time period measured by the propagation time period measuring part in each predetermined time period;
a flow rate calculator configured to calculate, based on the propagation time period measured by the propagation time period measuring part, a flow rate of the fluid to be measured; and
a water entry determiner configured to determine, based on the amplification degree set by the amplifier and the propagation time period measured by the propagation time period measuring part, whether or not water enters the measurement flow channel,
the water entry determiner being configured to determine a water entry when a ratio of a currently measured propagation time period to the propagation time period stored in the storage is less than or equal to a predetermined ratio within a predetermined time period after a currently set amplification degree is greater than a previously set amplification degree by a predetermined value or more.

3. The ultrasonic flowmeter of claim 1 or 2, wherein
the storage is configured to, after the water entry determiner determines the water entry, forgo updating the propagation time period measured by the propagation time period measuring part and is configured to, when a ratio of a currently measured propagation time period to the propagation time period stored in the storage exceeds the predetermined ratio, remove a determination of the water entry.

4. The ultrasonic flowmeter of any one of claims 1 to 3, wherein
the water entry determiner is configured to forgo making a determination for a definite time period immediately after installation of the ultrasonic flowmeter.

5. The ultrasonic flowmeter of any one of claims 1 to 4, wherein
the water entry determiner is configured to, when the fluid to be measured is air, forgo determining whether or not water enters the measurement flow channel.
